# EUROPEAN PATENT SPECIFICATION

(11) **EP 2 510 186 B1**
(45) Date of publication and mention of the grant of the patent: **03.04.2019**
(21) Application number: 10836258.3
(22) Date of filing: 09.12.2010
(51) Int. Cl.: E21B 41/00, F03B 13/02, H02K 7/18

(54) **ROTATING PRESSURE REDUCTION TURBINE WITH COG WHEELS FOR A WELL STREAM HAVING A HYDRAULIC POWER TRANSMISSION FOR OPERATION OF AN ELECTRICITY GENERATOR**
ROTIERENDE DRUCKREDUKTIONSTURBINE MIT ZAHNRÄDERN FÜR EINEN BOHRLOCHSTROM MIT EINEM HYDRAULIKGETRIEBE ZUM BETREIBEN EINES STROMGENERATORS
TURBINE DE RÉDUCTION DE LA PRESSION DE ROTATION POURVUE DE ROUES DENTÉES POUR FLUX DE PUITS AYANT UNE TRANSMISSION DE PUISSANCE HYDRAULIQUE VISANT À FAIRE FONCTIONNER UN GÉNÉRATEUR D'ÉLECTRICITÉ

(30) Priority: 11.12.2009 NO 20093508
(43) Date of publication of application: 17.10.2012
(73) Proprietor: Tool Tech AS, 1349 Rykkinn (NO)
(72) Inventor: ERIKSEN, Egil, 3570 ÅL (NO)
(74) Representative: Håmsø Patentbyrå AS
(86) International application number: PCT/NO2010/000455
(87) International publication number: WO 2011/071392

(56) References cited:
- WO-A1-2008/004880
- WO-A2-2007/036943
- US-A- 3 575 535
- US-A- 4 369 373
- US-A- 4 668 341
- US-A1- 2003 116 969
- US-A1- 2005 139 393
- US-A1- 2006 113 803
- US-A1- 2008 047 753
- US-B2- 6 745 844

## Description

The invention relates to a system for converting the energy potential from pressure reduction of a hydrocarbon well stream to electrical energy as indicated in the introduction to the accompanying claim, more particularly a rotating pressure reduction turbine consisting of a turbine with cog wheels, combined with a hydraulic pump constituting a part of a production piping system for a production installation offshore, an installation onshore, possibly a subsea installation. The flow energy is converted to electrical energy by the turbine driving a hydraulic pump leading hydraulic oil at a high pressure out into a piping system where hydraulic energy, possibly from several such power sources, is led to a common hydraulic motor driving an electric generator.
The invention may contribute to solving power requirements on the surface and under water, at the same time as it may produce energy without release of greenhouse gases to the atmosphere.
In a surface application, the environmental aspect of the technology will be important. When electrical energy is produced from available energy from a well stream, the need for production of electrical power via gas turbines on a production installation is reduced and thereby also reduction of CO₂ and NOₓ emissions to the surroundings. The petroleum activity on the Norwegian continental shelf is per 2007 responsible for about 31 % of the CO₂ emissions and about 24 % of emissions of NOₓ. Gas turbines produce about 75 % of this CO₂ emission, i.e. around 10 million tonnes per year.
On older production platforms, the operation is often energy consuming, among other things due to water injection into the reservoir, at the same time as supply of gas may become insufficient. Contribution of power through generation of electrical energy from the well streams is an environmentally friendly and reasonable alternative to electrical supply from shore, gas from other platforms or use of other fuels for production of electrical power.

In a large part of current field developments, subsea wells tied to fixed production platforms, floating production installations combined with subsea wells, satellite wells tied to existing subsea infrastructure and subsea installations tied directly to an onshore installation, are parts of the picture. In later years subsea process plants that are relatively power demanding have also been added.

For subsea installations there is installed a pressure reduction valve on the wellhead equipment itself, upstream of a possible subsea manifold. A choke valve is also normally installed for pressure reduction in the liquid stream from the pipeline from the subsea installations, upstream of the process on the production installation. This may be replaced by a turbine giving a power contribution on-board. In this case, a large part of the pressure drop is taken through the choke valve on the subsea installation.

Electrical energy is distributed to subsea installations via high-tension power cables from gas turbines on fixed or floating production platforms, or possibly from shore. Great losses are involved in transmission of power to subsea installations over long distances. By introducing new functions on existing subsea installations there may be insufficient power supply from the production plant.

It may be relevant to install subsea turbines and subsea generators to exploit this energy potential according to the same principles that apply to a surface installation. The difference is that the equipment and hydraulic and electric distribution of energy will be adapted to subsea use, and problems concerning certification for use in hazardous areas are not relevant. This is probably most relevant when there is a need for more electrical energy connected with upgrading of existing subsea equipment having new functionality.

The cost of installing subsea cables is great. Integration of a new power cable for an existing subsea installation may be difficult and too extensive to be justified relative to the need. The power generator may function in combination with a subsea accumulator package to charge the latter.

From the patent literature is quoted as background art:
US 2008/0047753 A1 describes a downhole power generator including a turbine having an inlet and an outlet channel for the well stream, a flywheel connected to the turbine and a downhole power generator with a magnet coupling.
NO 323524 B1 describes a downhole device in several embodiments positioned in a side channel in connection with a production tubing in a well. The object is to generate electricity for downhole equipment. The invention has different ranges of application, downhole application, and converts well stream energy to electricity through another principle than the present invention, otherwise same invention as that comprised by the patent below.
NO 315577 B1 describes a downhole turbine-/power generator combination enclosed in a housing connected into the well stream via a laterally displaced side channel, with permanent magnet and an energy converter connected to an electricity supply unit.
NO 325981 describes an apparatus including two impellers, and intended for controlling of the energy potential in any kind of fluid. There is not described how such a turbine is thought connected to a power generator, which is of vital importance for a practical integration in an underwater production system, or to obtain ATEX approval for the relevant application onboard a production platform. The present invention is a complete system solution for production of electric power from the energy potential in connection with a pressure reduction in a hydrocarbon flow, and the cog turbine is one of several elements being part of the solution. Different technologies are used in the turbine solutions.

A rotating pressure reduction turbine with cog wheels is described in WO2008/004880.

The object of the invention is to convert well stream energy into environmentally friendly electric energy and to bring about a pressure drop in the well stream.
The largest production platforms may have 30 production wells or more. In fixed installations the wellhead equipment is positioned at the surface, and the well stream passes a choke valve before going on to the process. Well stream from subsea wells flow firstly through a choke valve on the underwater equipment, and when the well stream, possibly from several wells, comes up the surface installation, it passes through a surface installed choke valve before going on to the process.
As an example, an oil well produces 20.000 barrels a day. The power that may be drawn depends on the efficiency of the system and the pressure drop across the turbine. The pressure drop across the choke valves may on certain installations be more than 100 bar. The turbine solution with cog wheels is designed to achieve a high efficiency. A hot well stream with produced water and sediments requires excellent wear properties for a rotating turbine.

The system may produce environmentally friendly energy as a supplement to other power production on a production platform. The underwater version of the system may be used as a supplement to other power production when it is desired to introduce new equipment requiring extra energy.

The object is achieved by the features disclosed in the below description and in the subsequent claims.

The invention relates to a power generating system for production of electric power comprising a rotary pressure reduction turbine replacing a pressure reduction valve (choke valve) as currently used to reduce hydrocarbon well stream pressure, at the same time as it converts the pressure drop in the well stream to hydraulic power for transfer of power and operation of a separate, hydraulic driven electric generator unit. The pressure reduction unit is designed especially for operation with a well stream as the power source. The unit is designed to give a large pressure drop, and is an alternative to a pressure reduction valve (choke valve) in the piping system of a well stream.

The rotating pressure reduction turbine with fitted hydraulic pump is installed in the piping system out from the well equipment, typically downstream of a choke valve. The choke valve is opened such that all or part of the pressure drop in the hydrocarbon flow is taken across the turbine. Isolation valves and connections may have various designs depending on the relevant installation and whether an above or below water application is concerned. These elements are parts of the system for operational reasons, but are not a part of the invention. Isolation valves are used to close piping connections in connection with the unit being installed or dismantled for replacement.

The invention relates more particularly to a rotating pressure reduction turbine for a hydro carbon well stream, the pressure reduction turbine being arranged in a surface implementation for driving a hydraulic pump which via a hydraulic distribution system is connected to a hydraulic motor and is arranged for providing the hydraulic motor with a drive medium for driving of a connected electric generator, a first cog wheel and a second cog wheel meshing with each other being supported across a flow direction in a turbine housing provided with an inlet and an outlet, and a first flow plate being arranged at the inlet and arranged for splitting the well stream and for directing a first and a second part stream toward the outsides of the first cog wheel and the second cog wheel, characterised in that the hydraulic pump via a turbine shaft is rotationally rigidly connected to one of the first cog wheel and the second cog wheel, the turbine shaft is supported in two journal bearings and is either enclosed by a dynamic shaft sealing arrangement arranged for sealing by injection of a sealing liquid, or is provided with a first magnet coupling arranged to transfer torque from the turbine to the hydraulic pump, and the electric generator and the connected hydraulic motor is positioned in an overpressure container.

Also disclosed is a rotating pressure reduction turbine for a hydro carbon well stream, the pressure reduction turbine being arranged in an underwater implementation for driving a hydraulic pump which via a hydraulic distribution system is connected to a hydraulic motor and is arranged for providing the motor with a drive medium for driving of a connected electric generator, a first cog wheel and a second cog wheel meshing with each other being supported across a flow direction in a turbine housing provided with an inlet and an outlet, and a first flow plate being arranged at the inlet and arranged for splitting the well stream and for directing a first and a second part stream toward the outsides of the first cog wheel and the second cog wheel, characterised in that the hydraulic pump via a turbine shaft is rotationally rigidly connected to one of the first cog wheel and the second cog wheel, the turbine shaft is supported in two journal bearings and is either enclosed by a dynamic shaft sealing arrangement arranged for sealing by injection of a sealing liquid, or is provided with a first magnet coupling arranged to transfer torque from the turbine to the hydraulic pump, and the electrical power generator is connected to the hydraulic motor via a second magnet coupling.

In the underwater implementation the pressure reduction turbine with the hydraulic pump may be provided with an arrangement for connecting and disconnecting process connections and hydraulic connections via an underwater tool system, so that the equipment may be pulled and installed from a surface vessel, wherein the power generator and the hydraulic motor, control valves and a control unit are fitted in an underwater module, and the power generator and the hydraulic motor, with control valves and the control unit are provided with an arrangement for mechanical, electric or hydraulic connection or disconnection via the underwater tool system, so that the equipment may be pulled and installed from the surface vessel.
Fig. 1 shows a schematic representation of a plant for production of electric power via a generator driven by a hydraulic motor being provided with a hydraulic drive medium from a distribution system connected to a number of pumps driven by well stream turbines.
Figs. 2A and 2B show an arrangement with respectively a longitudinal section and a cross-section drawing of a unit consisting of a pressure reduction turbine in a turbine housing connected to a hydraulic pump via a dynamic sealing arrangement. In an alternative embodiment, a dynamic seal may be replaced by a magnet coupling in a coupling housing.
Figs. 3A and 3B show the outside of the components.
Fig. 4 shows the unit in 3D.

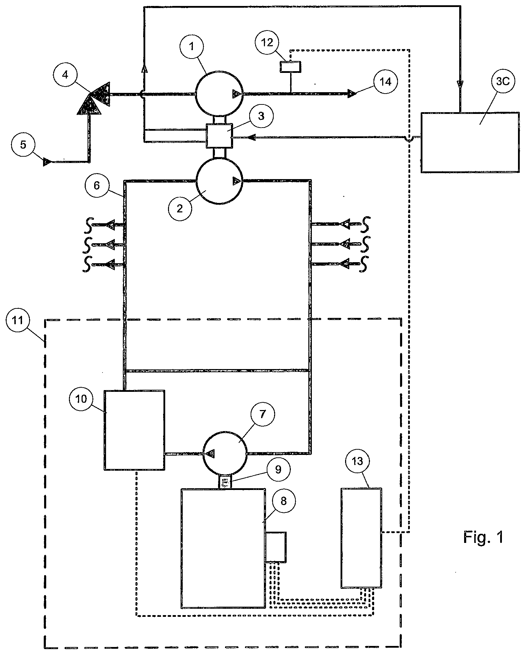

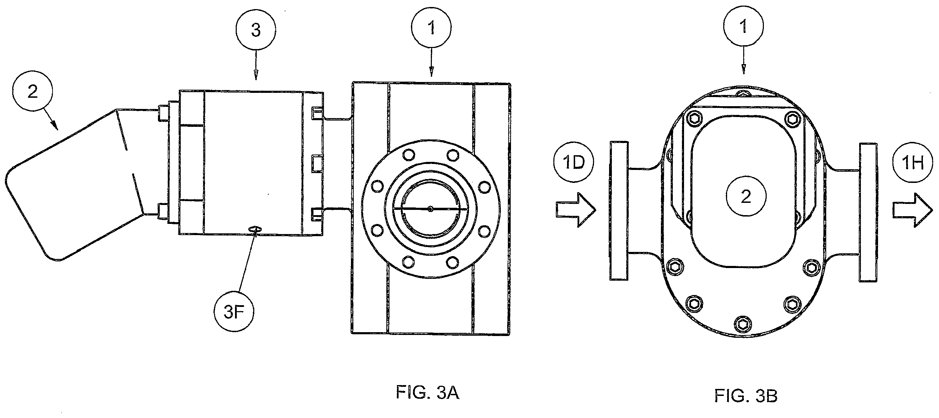

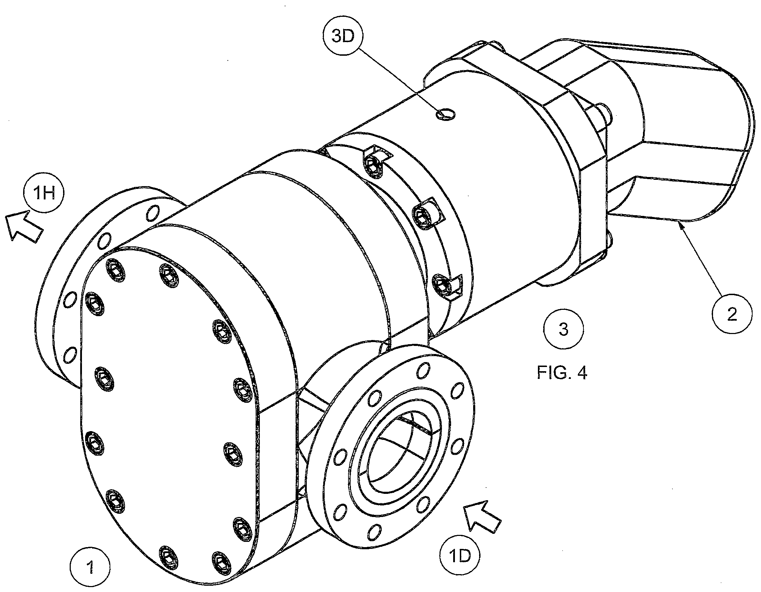

In the following is described an example of e preferred embodiment illustrated in the accompanying drawings. The figures 1-4 show the following components:
- 1: A rotating pressure reduction turbine.
- 1A: A main cog wheel connected to the turbine shaft.
- 1B: A secondary cog wheel.
- 1C: A turbine housing.
- 1D: An inlet to the pressure reduction turbine.
- 1E: A turbine shaft.
- 1F: A ceramic side plate for a turbine housing supporting a cog wheel and a turbine shaft.
- 1G: A ceramic side plate for a turbine housing supporting a cog wheel.
- 1H: An outlet from the pressure reduction turbine.
- 1I: A ceramic lining plate around the cog wheels.
- 1J: Ceramic lining halves in the inlet to the turbine.
- 1K: Ceramic lining halves in the outlet from the turbine.
- 1L: First flow plate on the inlet side.
- 1M: Second flow plate on the outlet side.
- 1N: A ceramic journal bearing for the turbine shaft.
- 2: A hydraulic pump.
- 3: A dynamic sealing arrangement for the turbine shaft.
- 3A: A packer housing for a dynamic shaft seal.
- 3B: A dynamic shaft seal.
- 3C: An injection system for a blocking liquid.
- 3D: An injection port for a blocking liquid in the packer housing.
- 3E: An outlet port for a blocking liquid in the packer housing.
- 3F: An outlet port for a blocking liquid in the packer housing.
- 4: A choke valve for well stream upstream of the pressure reduction turbine.
- 5: Well stream to choke valve.
- 6: Hydraulic ring line for energy transfer to hydraulic motor.
- 7: Hydraulic motor for driving an electric generator.
- 8: Electric generator.
- 9: Coupling between hydraulic motor and electric generator.
- 10: Hydraulic control valve for control of hydraulic motor.
- 11: Over-pressure container, Eex-p in a surface application - alternatively an under-water module.
- 12: Pressure transmitter on the outlet from the pressure reduction turbine.
- 13: Control unit for control of generator effort and pump control valve.
- 14: Outlet from pressure reduction turbine to pipe line/process.

Fig. 1 shows a schematic representation of a plant for production of electric power from pressure reduction in a well stream. A rotating pressure reduction turbine 1 is connected to a hydraulic pump 2 via a shaft 1E enclosed by a dynamic sealing arrangement 3. The pressure reduction turbine 1 is shown downstream of a choke valve 4. The choke valve 4 is fully or partly open, and the pressure reduction turbine 1 takes over the function that the choke valve 4 normally has in connection with pressure reduction of the fluid stream 5 from the producing well. There is extensive use of ceramics in the turbine design to withstand wear.

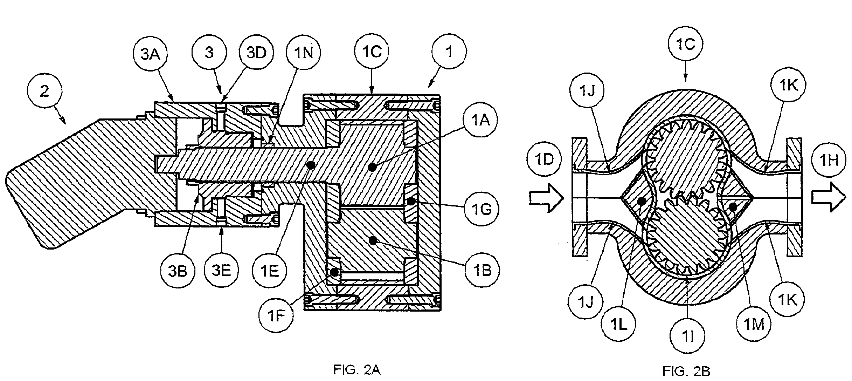

Fig. 2A shows a longitudinal section drawing of the pressure reduction turbine 1, the pump 2 and the sealing arrangement 3. The turbine 1 consists of two wide ceramic cog wheels 1A and 1B mounted in a turbine housing 1C, laterally to the inlet side 1D of the turbine. The cog wheels 1A and 1B mesh with each other in the middle, and the collective torque is transmitted to the pump 2 via a supported turbine shaft 1E from the main cog wheel 1A. Cylindrical end trunnions on the ceramic cog wheels 1A and 1B and the turbine shaft 1E are supported in two ceramic side plates 1F and 1G.

Fig. 2B shows a cross-section drawing of the pressure reduction turbine 1. Two cog wheels 1A and 1B are enclosed in the turbine housing 1C fitted on to a pipe section via flanges on respectively the inlet side 1D and the outlet side 1H of the turbine. The turbine housing is internally lined with ceramic elements 1I around the cog wheels and has ceramic elements 1J and 1K internally in the turbine inlet 1D and outlet 1H respectively to withstand erosion from particles in the well stream.

The well stream is split by a first flow plate 1L in the flow inlet, so that half of the liquid is directed toward the outsides of the two cog wheels 1A, 1B in the interstice between the teeth and the ceramic lining 1I in the turbine housing 1C, and the cog wheels 1A, 1B are driven round having opposite rotation. When the well stream comes out from the cog wheels 1A, 1B the two liquid streams are guided via a second flow plate 1M toward the outlet side 1H of the turbine.

The second flow plate 1M (outlet flow plate) is equipped with ventilation openings to avoid pressure build-up and accumulation of particles when the cog wheels 1A, 1B direct liquid into the area between the guide plates in the middle of the turbine, where the cog wheels mesh. Underpressure on the downstream side contributes to the liquid being sucked out through the opening in the middle of the flow plate 1M and mixes with the rest of the liquid passing the turbine wheels 1A, 1B.

Fig. 2A shows a longitudinal section of the turbine 1, the pump 2 and the turbine shaft 1E supported in a ceramic journal bearing 1N in the transition between the turbine housing 1 and the packer housing 3A. The shaft 1A is enveloped by a dynamic sealing arrangement 3, designed to prevent gas leakage from the turbine to the outside atmosphere.

In a preferred embodiment, the turbine shaft 1E is connected to the hydraulic pump 2 being mounted on the extreme end of the packer housing 3A. The packer housing 3A encloses an arrangement for a dynamic shaft seal 3B, for example of the type Burgmann SHFV-D. Sealing liquid is injected into the dynamic shaft seal 3B from a system 3C connected to the shaft seal 3B via an injection port 3D in the packer housing 3A. Liquid returns from the dynamic shaft seal 3B is led back to the injection system for sealing liquid 3C via a connection from the outlet ports 3E and 3F in the packer housing 3A.

Alternatively, a first magnet coupling may be employed between the turbine 1 and the pump 2 to avoid a dynamic seal.

Fig. 1 shows that the pressure reduction turbine 1 drives a hydraulic pump 2 leading hydraulic oil at high pressure out into a piping system 6 where hydraulic energy, possibly generated from several corresponding combined turbine and pump units, are collected and led to a hydraulic motor 7 driving an electric generator 8 via a second coupling 9 for production of electric power. A hydraulic control valve 10 is fitted in the hydraulic circuit 6 for control of the hydraulic motor 7.

The generator 8 with drive motor 7 and control equipment 10 and 13 are preferably positioned in a non-explosive area to be able to employ standard equipment. Such a solution is to place the electrical equipment in a container 11 having overpressure, classified as so-called EEx-p, being known in the art. The generator 8 with the hydraulic drive motor 7 are dimensioned and adapted to the power of the relevant power generating system.

In an underwater employment, the problem regarding an explosive zone is non-existent. The equipment in a surface application being mounted in an EEx-p container 11 may be installed in a common underwater equipment module. In an underwater solution, it is relevant to integrate an accumulator package to supply power when the unit is not producing electricity.

The unit is typically installed downstream of an existing choke valve 4 that may take some of the pressure drop, depending on the relevant well stream, production control, etc. A pressure transmitter 12 in the outlet from the pressure reduction turbine 1 is connected to a control unit 13 controlling the effort of the generator 8 and the hydraulic control valve 10 to maintain the desired pressure on the downstream side 14 of the pressure reduction turbine and the desired working pressure in the hydraulic ring line 6 for transfer of energy to the hydraulic motor 7 driving the generator 8 via the second coupling 9. In an underwater solution, which is not part of the invention, a preferred solution is that the second coupling 9 is a magnet coupling.

The piping section with the turbine 1 and pump 2 is equipped with an arrangement for connecting and disconnecting in connection with installation or dismantling, alternatively via operation with a remote operated tool system in an underwater application. The connecting points in the remaining piping system are equipped with a coupling system and isolation valves.

## Claims

1. A rotating pressure reduction turbine (1) for a hydro carbon well stream,
the pressure reduction turbine (1) being arranged in a surface implementation for driving a hydraulic pump (2) which via a hydraulic distribution system (6) is connected to a hydraulic motor (7) and is arranged for providing the hydraulic motor (7) with a drive medium for driving of a connected electric generator (8),
a first cog wheel (1A) and a second cog wheel (1B) meshing with each other being supported across a flow direction in a turbine housing (1C) provided with an inlet (1D) and an outlet (1H), and
a first flow plate (1L) being arranged at the inlet (1D) and arranged for splitting the well stream and for directing a first and a second part stream toward the outsides of the first cog wheel (1A) and the second cog wheel (1B),
**characterised in that**
the hydraulic pump (2) via a turbine shaft (1E) is rotationally rigidly connected to one of the first cog wheel (1A) and the second cog wheel (1B),
the turbine shaft (1E) is supported in two journal bearings (1F, 1N) and is either enclosed by a dynamic shaft sealing arrangement (3) arranged for sealing by injection of a sealing liquid, or is provided with a first magnet coupling arranged to transfer torque from the turbine (1) to the hydraulic pump (2), and
the electric generator (8) and the connected hydraulic motor (7) is positioned in an overpressure container (11).

## Patentansprüche

1. Rotierende Druckreduktionsturbine (1) für einen Wasserkohlenstoff-Bohrlochstrom,
wobei die Druckreduktionsturbine (1) in einer Oberflächenausführung zum Antreiben einer Hydraulikpumpe (2) angeordnet ist, die über ein hydraulisches Verteilersystem (6) mit einem Hydraulikmotor (7) verbunden ist und zum Versorgen des Hydraulikmotors (7) mit einem Antriebsmedium zum Antreiben eines angeschlossenen elektrischen Generators (8) angeordnet ist,
wobei ein erstes Zahnrad (1A) und ein zweites Zahnrad (1B), die miteinander in Eingriff stehen, quer zur Strömungsrichtung in einem Turbinengehäuse (1C) gestützt werden, das mit einem Einlass (1D) und einem Auslass (1H) versehen ist, und
wobei eine erste Strömungsplatte (1L) am Einlass (ID) angeordnet ist und zum Aufteilen des Bohrlochstroms und zum Leiten eines ersten und eines zweiten Teilstroms zu den Aussenseiten des ersten Zahnrads (1A) und des zweiten Zahnrads (1B) angeordnet ist,
**dadurch gekennzeichnet,**
**dass** die Hydraulikpumpe (2) über eine Turbinenwelle (1E) drehfest mit einem von dem ersten Zahnrad (1A) oder dem zweiten Zahnrad (1B) verbunden ist,
**dass** die Turbinenwelle (1E) in zwei Gleitlagern (1F, 1N) gelagert ist und entweder von einer dynamischen Wellendichtungsanordnung (3) umschlossen ist, die zur Abdichtung durch Einspritzen einer Sperrflüssigkeit ausgestaltet ist, oder mit einer ersten Magnetkupplung versehen ist, die zur Drehmomentübertragung von der Turbine (1) auf die Hydraulikpumpe (2) angeordnet ist, und
**dass** der elektrische Generator (8) und der angeschlossene Hydraulikmotor (7) in einem Überdruckbehälter (11) positioniert sind.

## Revendications

1. Turbine de réduction de la pression de rotation (1) pour un flux de puits d'hydro-carbone,
la turbine de réduction de pression (1) étant agencée dans une réalisation de surface pour entraîner une pompe hydraulique (2) qui, par l'intermédiaire d'un système de distribution hydraulique (6) est reliée à un moteur hydraulique (7) et est agencée pour fournir au moteur hydraulique (7) un milieu d'entraînement pour entraîner un générateur électrique (8) raccordé,
une première roue dentée (1A) et une seconde roue dentée (1B) s'engrenant l'une dans l'autre étant supportées à travers une direction d'écoulement dans un carter de turbine (1C) muni d'une entrée (1D) et d'une sortie (1H), et
une première plaque d'écoulement (1L) étant disposée à l'entrée (1D) et agencée pour diviser le courant du puits et pour diriger un premier et un second courant partiel vers les côtés extérieurs de la première roue dentée (1A) et de la seconde roue dentée (1B),
**caractérisée**
**en ce que** la pompe hydraulique (2) par l'intermédiaire d'un arbre de turbine (1E) est reliée de manière rigide en rotation à l'une de la première roue dentée (1A) et de la seconde roue dentée (1B),
**en ce que** l'arbre de turbine (1E) est supporté dans deux paliers lisses (1F, 1N) et est soit entouré par un dispositif d'étanchéité d'arbre dynamique (3) agencé pour assurer l'étanchéité par injection d'un liquide d'étanchéité, soit est muni d'un premier accouplement magnétique agencé pour transférer le couple de la turbine (1) vers la pompe hydraulique (2), et
**en ce que** le générateur électrique (8) et le moteur hydraulique raccordé (7) sont positionnés dans un réservoir de surpression (11).
